# EUROPÄISCHE PATENTSCHRIFT

(11) **EP 1 288 245 B1**
(45) Veröffentlichungstag und Bekanntmachung des Hinweises auf die Patenterteilung: **19.09.2007**
(21) Anmeldenummer: 02015071.0
(22) Anmeldetag: 05.07.2002
(51) Int. Cl.: C08G 77/06, C09D 183/04, C08L 83/04

(54) **Siliciumverbindungen enthaltendes Mittel zur Beschichtung von Oberflächen**
Silicon containing compounds for treating surfaces
Compositions contenant du silicium pour le traitement de surfaces

(30) Priorität: 25.08.2001 DE 10141687
(43) Veröffentlichungstag der Anmeldung: 05.03.2003
(73) Patentinhaber: Degussa GmbH, 40474 Düsseldorf (DE)
(72) Erfinder: Edelmann, Roland, 79664 Wehr (DE); Monkiewicz, Jaroslaw, Dr., 79618 Rheinfelden (DE); Borup, Björn, Dr., 79618 Rheinfelden (DE); Burger, Rosemarie, 79594 Inzlingen (DE)

(56) Entgegenhaltungen:
- EP-A- 0 490 433
- DE-A- 19 813 709
- US-A- 4 218 354
- US-A- 4 243 692
- US-A- 5 665 814

## Beschreibung

Die vorliegende Erfindung betrifft ein Siliciumverbindungen enthaltendes Mittel, das im Wesentlichen für die Erzeugung einer Beschichtung auf Oberflächen sowie als Rohstoff für Lacke verwendet wird. Ferner betrifft die vorliegende Erfindung ein Verfahren zur Herstellung eines solchen Mittels. Weiterhin betrifft die Erfindung Beschichtungen bzw. Artikel, die durch Aufbringen eines solchen Mittels oder einer entsprechenden Zubereitung erhältlich sind.

Organofunktionelle Silane oder Siloxane werden vielfach zur Modifizierung von Oberflächeneigenschaften eingesetzt, beispielsweise als Haftvermittler, als Bindemittel oder zur Ausstattung einer Oberfläche mit Wasser, Öl oder Schmutz abweisenden Eigenschaften.

So sind organofunktionelle Silane und Kieselsole Bestandteil vieler lösemittelhaltiger oder wässriger Zubereitungen, beispielsweise in Mitteln zur Beschichtung von Oberflächen, wie Top Coats, Lacke oder Korrosionsschutzmittel - um nur einige Beispiele zu nennen.

Durch eine Beschichtung kann u. a. die Beständigkeit eines Substrats gegenüber von außen wirkenden Einflüssen verbessert sowie das optische Erscheinungsbild konserviert oder in gewünschter Weise verändert werden. So werden insbesondere kratzempfindliche Substrate mit einer mehr oder weniger kratzfesten Beschichtung versehen, beispielsweise durch Aufbringen von Lack auf Eisen, Stahl, Aluminium, Kupfer, Silber, Magnesium, Zink, Zinn, Nickel oder Legierungen, beispielsweise auf der Basis von Magnesium/Aluminium. Auch werden Metalle oder andere Substrate, wie Keramik, Ziegel, Glas, Kunststein, Kunststoffe, zur Verbesserung ihrer Korrosionsbeständigkeit, Witterungsbeständigkeit oder ihrer Bioorganismen abweisenden Eigenschaften beschichtet.

An eine solche Beschichtung werden in der Regel hohe Ansprüche gestellt, insbesondere hinsichtlich Elastizität, Schlagzähigkeit, Kratzfestigkeit, UV- und Chemikalienbeständigkeit, Glanzhaltung, Oberflächenqualität - insbesondere das optische Erscheinungsbild - und nicht zuletzt bezüglich der Wirtschaftlichkeit - insbesondere hinsichtlich Verarbeitbarkeit, Verarbeitungsdauer, Materialverbrauch, Emissionsverhalten bzw. Flammpunkt. So sind beispielsweise geringe Schichtdicken, ein gutes und dauerhaftes Haftvermögen, leichte und gute Verarbeitbarkeit der Beschichtungszusammensetzung, Lagerbeständigkeit des Mittels erwünscht. Häufig beobachtet man jedoch, dass insbesondere die Beschichtung auf einem sehr elastischen bzw. duktilen Material, wie Aluminium oder Kupfer, den Materialeigenschaften des Substrats nicht entsprechen kann und die Beschichtung reißt oder gar abblättert. Vielfach müssen die Substrate vor dem Aufbringen einer Beschichtung aufwendig vorbehandelt werden, beispielsweise durch Passivierung, Phosphatierung, Chromatierung, Sputtern, etc. Auch werden insbesondere bei wässrigen Beschichtungsmitteln nicht immer zufrieden stellende Oberflächenqualitäten erzielt. Demgegenüber besitzen insbesondere ethanolhaltige Beschichtungsmittel einen sehr niedrigen Flammpunkt, sodass für den Transport, die Lagerung und bei der Verarbeitung besondere, meist aufwendige und kostenintensive Randbedingungen zu beachten sind. Im Allgemeinen ist eine dünne, glatte, gut haftende, elastische, gegebenenfalls nicht brennbare, UV-stabile sowie gegebenenfalls möglichst leicht erzeugbare Beschichtung angestrebt.

DE 197 15 940 A1 offenbart ein Verfahren zur Herstellung einer auf einem Trägermaterial als Schicht aufzubringenden keramischen Zusammensetzung, welche als Komponenten 25 bis 28 % keramische Partikel, insbesondere Siliciumdioxid, Aluminiumoxid, Zirkonoxid, Siliciumcarbid, Siliciumnitrid, und 5 bis 12 % Pigment, jeweils mit einer Teilchengröße von 0,5 bis 1 µ als Füllstoff, 30 bis 40 % Bindemittel, wie Metalloxide, Hydrolysate bzw. Kondensations-/Polymerisationsprodukte von Metallalkoxiden, wie Methoxy, Ethoxy oder Butoxy, von Aluminium, Silicium, Zinn, Titan oder Zirkon sowie Silikate, Zirkonsalze, Phosphate, organische Metalloxide und dergleichen, und 30 bis 40 % Alkohol, insbesondere Isopropanol, als Lösungsmittel umfasst. Bei der Herstellung werden die Feststoffpartikel mit dem Lösungsmittel in einem Mengenverhältnis 1 : 1 in einer Kugelmühle dispergiert, anschließend die Dispersion mit dem Bindemittel im Solzustand in einem Mengenverhältnis 6 : 4 versetzt und unter wohl definierten Bedingungen gerührt. Dieses Herstellungsverfahren ist sehr aufwendig.

Ähnliche Siliciumverbindungen enthaltende Zusammensetzungen für Sol-Gel-Beschichtungen, als Gießereibindemittel, für die Herstellung von Glasschichten zum anodischen Bonden, für die Erzeugung strukturierter anorganischer Schichten, für die Herstellung von Verbundwerkstoffen oder zum Schutz eines metallischen Substrats vor Korrosion gehen beispielsweise aus DE 44 17 405 A1, EP 0 830 324 B1, EP 0 842 967 A2, DE 196 47 369 A1, DE 19813 709 A1 oder WO 98/22241 hervor.

Auch DE 198 14 605 A1 offenbart ein wasserbasierendes Korrosionsschutzmittel zur Versiegelung von metallischen Untergründen, das aus einer wässrigen Dispersion (a) wenigstens eines Silanderivats, insbesondere eines glycidyloxyfunktionellen oder eines endständig diolfunktionellen Alkoxysilan-Derivats, und (b) einer kolloidalen Kieselsäure und/oder einem kolloidalen Silikat besteht. Bevorzugt werden Mittel, die im Wesentlichen frei von organischen Lösungsmitteln sind, jedoch wird Hydrolysealkohol oder Alkohol, beispielsweise Propanol, als zusätzliche Komponente nicht ausgeschlossen.

Nachteilig für alle diese Beschichtungsmittel ist ein Flammpunkt < 21 °C, welcher durch die Bildung von Alkoholen als Nebenprodukt bei der partiellen Hydrolyse der monomeren Alkoxysilane entsteht und in der Zubereitung als Lösemittel verbleibt. Der niedrige Flammpunkt erfordert zusätzliche, meist kostenintensive Maßnahmen zur Einhaltung der gesetzlichen Bestimmungen, insbesondere für den Transport, die Lagerung und bei der industriellen Verarbeitung der Beschichtungsmittel, z. B. im Coil-Coating-Verfahren. Da für eine gute Filmbildung und Haftung der Beschichtung weitere Lösemittel zugesetzt werden müssen, liegt auch der Feststoffgehalt der Beschichtungsmittel oftmals relativ niedrig, meist bei weniger als 35 Gew.-%.

Der vorliegenden Erfindung lag die Aufgabe zugrunde, ein Mittel für die Beschichtung von Substraten bereitzustellen, das sich durch einen Flammpunkt oberhalb 21 °C, durch einen hohen Feststoffgehalt bei ausreichender Lagerstabilität und bei Applikation durch Beschichtungen mit einer guten Oberflächenqualität auszeichnet.

Die gestellte Aufgabe wird erfindungsgemäß entsprechend den Angaben in den Patentansprüchen gelöst.

Überraschenderweise wurde nun gefunden, dass ein Mittel, das weitgehend lagerbeständig ist, vorzugsweise 6 Monate, und dabei einen Flammpunkt von mehr als 21 °C beibehält, durch Mischen und Umsetzen der Komponenten
(i) mindestens eines Alkyltrialkoxysilans, vorzugsweise 50 bis 70 Gew.-%,
(ii) mindestens eines Alkoxysiloxans und/oder mindestens eines Tetraalkoxysilans, vorzugsweise 10 bis 25 Gew.-%,
(iii) mindestens eines wässrigen Kieselsäuresols, vorzugsweise mit einem Gehalt an SiO₂ von 20 bis 50 Gew.-%,
(iv) mindestens einer Säure, vorzugsweise 0,1 bis 5 Gew.-%, und
(v) mindestens eines Alkohols oder eines entsprechenden Gemischs, insbesondere 1-Methoxypropanol, n-Propanol, n-Butanol oder tert.-Amylalkohol oder einem Gemisch aus n-Butanol und n-Butylglykol (beispielsweise ein Gemisch mit 1 bis 20 Gew.-% n-Butylglykol), wobei Komponente (v) geeigneterweise einen Flammpunkt > 21 °C aufweist, vorzugsweise ≥ 25 °C, besonders vorzugsweise > 25 °C, ganz besonders vorzugsweise ≥ 30 bis 50 °C, bevorzugt sind ferner 0,1 bis 60 Gew.-% der Komponente (v),
wobei die eingesetzten Komponenten in Summe 100 Gew.-% ergeben und vorzugsweise sich der Anteil für das wässrige Kieselsol aus der notwendigen Menge an Hydrolysewasser ergibt,
in einfacher und wirtschaftlicher Weise erhältlich ist, wenn man die Komponenten (i) und (ii) sowie gegebenenfalls anteilig Komponente (v) vorlegt, Komponente (iii) zugibt, das Gemisch auf eine Temperatur im Bereich von -5 bis 10 °C einstellt und nachfolgend ebenfalls unter Rühren Komponente (iv) zusetzt, anschließend lässt man nachreagieren, destilliert danach entstandenen Hydrolysealkohol unter vermindertem Druck ab, vorzugsweise mindestens 80 Gew.-%, besonders vorzugsweise 85 bis 99 Gew.-%, ganz besonders vorzugsweise 90 bis 95 Gew.-%, und ersetzt diesen durch Zugabe von Komponente (v).

Geeigneterweise legt man hierzu gegebenenfalls unter Kühlung zunächst die Komponenten (i) und (ii) sowie gegebenenfalls anteilig Komponente (v) unter Kühlung vor, gibt Komponente (iii) zu, stellt das Gemisch unter Rühren auf eine Temperatur im Bereich von -5 bis 20 °C, vorzugsweise im Bereich von -2 bis 10 °C, ein und gibt nachfolgend unter kräftigem Rühren Komponente (iv) zu, wobei die Temperatur ansteigt, anschließend lässt man nachreagieren, destilliert danach vorzugsweise bis zu 95 Gew.-% des entstandenen Hydrolysealkohols unter vermindertem Druck ab und ersetzt diesen durch Zugabe von Komponente (v). Anschließend erfolgt die Destillation eines azeotropen Gemischs aus verbliebenem Hydrolysealkohol und unter gleichzeitigem Zusatz von Komponente (v) bis laut GC vorzugsweise noch max. 17 Flächenprozent Hydrolysealkohol, insbesondere Ethanol, in der Fraktion enthalten sind.

So kann man in vorteilhafter Weise ein Mittel erhalten, das als klare bzw. opalisierende Flüssigkeit mit einer Viskosität von ca.10 mPa s (DIN 53 015) anfällt und einen Flammpunkt von mehr als 21 °C besitzt, ferner in einfacher und wirtschaftlicher Weise zu verarbeiten ist und darüber hinaus qualitativ hochwertige Beschichtungen mit ausgezeichnetem Haftvermögen auf Substraten, wie Aluminium, Eisen, auch verzinkt, phosphatiert oder chromatiert, liefert.

Auch weist das vorliegende Mittel bei 6 Monaten Lagerzeit gute Lagereigenschaften auf.

Weiterhin kann man das vorliegende Mittel in ausgezeichneter Weise nach dem Coil-Coating-Verfahren unter thermischer Härtung verarbeiten. Die Härtung der Beschichtung ist bei Temperaturen im Bereich von 180 bis 240 °C innerhalb von Sekunden bis wenigen Minuten möglich.

Darüber hinaus kann das vorliegende Mittel in hervorragender Weise auch als Rohstoff für die Herstellung von Lacken eingesetzt werden, beispielsweise für Kratzfestanwendungen.

Ferner kann das vorliegende Mittel in hervorragender Weise auch als Lackrohstoff für die Zubereitung von anorganischen oder organisch modifizierten anorganischen Sol-Gel-Klarlacken oder pigmentierten Lacken unter Zusatz weiterer Lackrohstoffe, Lackadditive, wie z. B. Lichtschutzmittel, Radikalfänger, Vernetzungskatalysatoren, filmbildende Hilfsmittel, Verlaufmittel, Emulgatoren, und Lösemittel, z. B. Hochsieder, aber auch unter Zusatz von anorganischen Pigmenten und Füllstoffen, eingesetzt werden, beispielsweise als Schutzschichten mit guter Kratz-, Abrieb- und Chemikalienbeständigkeit.

Gegenstand der vorliegenden Erfindung ist daher ein Siliciumverbindungen enthaltendes Mittel, welches als Reaktionsgemisch, d. h. als Eduktkomponenten,
(i) mindestens ein Alkyltrialkoxysilan,
(ii) mindestens ein Alkoxysiloxan und/oder mindestens ein Tetraalkoxysilan,
(iii) mindestens ein wasserhaltiges Kieselsäuresol,
(iv) mindestens eine Säure und
(v) mindestens einen Alkohol, ausgewählt aus der Reihe 1-Methoxypropanol, n-Propanol, n-Butanol und tert.-Amylalkohol, oder ein entsprechendes Gemisch, wobei Komponente (v) einen Flammpunkt > 21 bis 50 °C aufweist,
enthält.

Gegenstand der vorliegenden Erfindung ist ferner ein Siliciumverbindungen enthaltendes Mittel, das erhältlich ist durch
Mischen und Umsetzen der Komponenten
(i) 50 bis 70 Gew.-% mindestens eines Alkyltrialkoxysilans,
(ii) 10 bis 25 Gew.-% mindestens eines Alkoxysiloxans und/oder mindestens eines Tetraalkoxysilans,
(iii) 15 bis 25 Gew.-% mindestens eines wässrigen Kieselsäuresols
(iv) 0,1 bis 5 Gew.-% mindestens einer Säure,
(v) 0,1 bis 60 Gew.-% mindestens eines Alkohols und/oder Glykols,
wobei die Komponente (v) einen Flammpunkt > 21 bis 50 °C aufweist und die eingesetzten Komponenten in Summe maximal 100 Gew.-% ergeben,
indem man die Komponenten (i) und (ii) sowie gegebenenfalls anteilig Komponente (v) vorlegt, Komponente (iii) zugibt, das Gemisch auf eine Temperatur im Bereich von -5 bis 10 °C einstellt und nachfolgend ebenfalls unter Rühren Komponente (iv) zusetzt, anschließend lässt man nachreagieren, destilliert danach entstandenen Hydrolysealkohol unter vermindertem Druck ab, vorzugsweise mindestens 80 Gew.-%, besonders vorzugsweise 85 bis 99 Gew.-%, ganz besonders vorzugsweise 90 bis 95 Gew.-% des entstandenen Hydrolysealkohols, insbesondere, wenn der Hydrolysealkohol als solcher einen Flammpunkt von < 21 °C, geeigneterweise von < 24 °C, aufweist, und ersetzt diesen zumindest anteilig durch Zugabe von Komponente (v).

Somit ist auch Gegenstand der vorliegenden Erfindung ein Verfahren zur Herstellung eines erfindungsgemäßen Mittels, das dadurch gekennzeichnet ist, dass man die Komponenten (i) und (ii) sowie gegebenenfalls anteilig Komponente (v) vorlegt, Komponente (iii) zugibt, das Gemisch auf eine Temperatur im Bereich von -5 bis 10 °C einstellt und nachfolgend Komponente (iv) zusetzt, anschließend lässt man nachreagieren, destilliert danach entstandenen Hydrolysealkohol unter vermindertem Druck ab und ersetzt im gleichen Maße wie Hydrolysealkohol sowie Wasser aus dem System entfernt werden diesen Anteil durch Zugabe von Komponente (v).

Vorzugsweise setzt man beim erfindungsgemäßen Verfahren als Komponente (i) des Reaktionsgemischs mindestens ein Alkyltrialkoxysilan der allgemeinen Formel I

R-Si(OR¹)₃ (I),

worin R eine lineare, verzweigte oder cyclische Alkylgruppe mit 1 bis 16 C-Atomen und R¹ eine Methyl-, Ethyl-, 1-Methoxyethyl-, 2-Methoxyethyl-, 1-Methoxypropyl-, 2-Methoxypropyl-, Alkylpolyether-, insbesondere entsprechende Ester von Ethylglykol, Butylglykol, tert.-Amyl-, n-Propyl-, i-Propyl-, n-Butyl- oder i-Butyl-Gruppe darstellen,
ein. Insbesondere bevorzugt man Methyltrimethoxysilan, Methyltriethoxysilan, i-Propyltrimethoxysilan, i-Propyltriethoxysilan, n-Propyltrimethoxysilan und n-Propyltriethoxysilan.

Als Komponente (ii) des Reaktionsgemischs setzt man beim erfindungsgemäßen Verfahren vorzugsweise
mindestens ein Alkoxysiloxan der allgemeinen Formel II

(R²O)₃SiO[SiO(OR²)₂]ₙSi(OR²)₃ (II),

worin die Gruppen R² gleich oder verschieden sind und R² ein Wasserstoffatom, eine Methyl-, Ethyl-, 1-Methoxyethyl-, 2-Methoxyethyl-, 1-Methoxypropyl-, 2-Methoxypropyl-, n-Propyl-, i-Propyl-, n-Butyl-, i-Butyl-, tert.-Amyl- oder Alkylpolyether-Gruppe darstellt, insbesondere resultierende Ester von Ethylglykol, Butylglykol, und der durchschnittliche Oligomerisierungsgrad n eine Zahl von 0 bis 50, vorzugsweise 1 bis 30, ist, beispielsweise ein Ethylsilikat wie DYNASIL^{®} 40,
oder mindestens ein Tetraalkoxysilan der allgemeinen Formel III

Si(OR³)₄ (III),

worin die Gruppen R³ gleich oder verschieden sind und R³ ein Wasserstoffatom, eine Methyl-, Ethyl-, n-Propyl-, i-Propyl-, n-Butyl-, i-Butyl, tert.-Amyl-, 1-Methoxyethyl-, 2-Methoxyethyl-, 1-Methoxypropyl-, 2-Methoxypropyl-, Alkylpolyether-Gruppe, insbesondere entsprechende Ester von Ethylglykol, Butylglykol, darstellt, beispielsweise Tetraethoxysilan,
oder ein Gemisch aus mindestens einem Alkoxysiloxan der allgemeinen Formel II und mindestens einem Tetraalkoxysilan der allgemeinen Formel III
ein.

Ferner setzt man beim erfindungsgemäßen Verfahren als Komponente (iii) mindestens ein wässriges Kieselsäuresol aus der Reihe
(a) anionisches oder kationisches Kieselsäuresol mit 30 bis 50 Gew.-% SiO₂-Gehalt, einer Partikelgröße der Kolloidpartikel von 6 bis 50 nm und einer Oberfläche von 50 bis 300 m²/g, einem pH-Wert des Sols von 8 bis 11 und einer Viskosität bei 25 °C von weniger als 45 mPa s, beispielsweise Ludox^{®} HS 40, Levasil^{®} 200/30, Snowtex^{®} ST-O33, Köstrosol^{®} 3530, Köstrosol^{®} 3550, Nyacoll^{®} 9950, oder
(b) saures Kieselsäuresol mit 20 bis 50 Gew.-% SiO₂-Gehalt, einer Partikelgröße der Kolloidpartikel von 10 bis 50 nm und einer Oberfläche von 100 bis 300 m²/g, einem pH-Wert des Sols von 2 bis 5 und einer Viskosität von weniger als 10 mPa s, beispielsweise Levasil^{®} 200S/30,
ein.

Als Komponente (iv) des Reaktionsgemischs setzt man beim erfindungsgemäßen Verfahren bevorzugt mindestens eine wässrige oder konzentrierte Säure aus der Reihe Schwefelsäure, Salpetersäure, Salzsäure, d. h. Chlorwasserstoff, Phosphorsäure oder Essigsäure ein.

Weiterhin ist Gegenstand der vorliegenden Erfindung die Verwendung des erfindungsgemäßen Mittels oder ein erfindungsgemäß hergestelltes Mittel für die Beschichtung von Substraten.

So verwendet man das erfindungsgemäße Mittel bevorzugt für die Beschichtung von metallischen Oberflächen, beispielsweise Magnesium, Aluminium, Zinn, Zink, Kupfer, Silber, Nickel, Eisen, Stahl, Legierungen, insbesondere Leichtmetalllegierungen, von Holzoberflächen oder von Kunststoffoberflächen, beispielsweise PVC.

Ferner kann man das erfindungsgemäße Mittel in vorteilhafter Weise als Rohstoff für die Herstellung eines Lacks verwenden.

Somit ist auch Gegenstand der vorliegenden Erfindung ein Lack, für dessen Herstellung man ein erfindungsgemäßes Mittel als Einsatzstoff verwendet.

Ebenfalls Gegenstand der vorliegenden Erfindung ist eine Beschichtung, die unter Anwendung eines erfindungsgemäßen Mittels oder eines erfindungsgemäßen Lacks erhältlich ist. Die Applikation des erfindungsgemäßen Mittels oder Lacks auf einem Substrat, insbesondere einem zu behandelnden Artikel, der beispielsweise aus einem der oben genannten Substrate besteht, kann in der Regel ohne Vorbehandlung erfolgen, sofern die zu behandelnde Oberfläche im Wesentlichen frei von Belägen, wie Staub oder Fett, ist. Das Aufbringen des erfindungsgemäßen Mittels oder Lacks erfolgt beispielsweise durch Sprühen, Spritzen, Streichen, Tauchen und einer anschließenden Trocknung, vorzugsweise bei einer höheren Temperatur, insbesondere bei 180 bis 240 °C, wobei die erfindungsgemäße Beschichtung rasch aushärtet und vorteilhaft an der Oberfläche des Substrats anbinden kann.

Gegenstand der vorliegenden Erfindung sind somit auch Artikel mit einer erfindungsgemäßen Beschichtung.

Im Allgemeinen kann man das erfindungsgemäße Mittel durch eine gezielte, partielle Hydrolyse und Kondensation von Alkylalkoxysilanen und Alkoxysilanen bzw. Alkoxysiloxanen in Anwesenheit von wässrigem Kieselsol herstellen und ersetzt dabei im Wesentlichen den vorliegenden Hydrolysealkohol durch einen Alkohol oder ein entsprechendes Gemisch aus Alkoholen , wobei die Komponente (v) einen Flammpunkt von deutlich mehr als 21 bis 50 °C aufweist. Die bei der gezielten Hydrolyse entstehenden Silanole können unter Ausbildung von Si-O-Si-Strukturen untereinander kondensieren, können aber auch mit OH-Gruppen an der Oberfläche der SiO₂-Nanopartikel des Kieselsols kondensieren. In der Regel kann so ein niedermolekulares oligomeres anorganisch-organisches Netzwerk ausgebildet werden, welches bei der Gelbildung in der Beschichtung zu einem mechanisch stabilen Netzwerk durchhärtet.

Wie auch den Beispielen zu entnehmen ist, kann man so in vorteilhafter Weise bevorzugt Zubereitungen mit einem Flammpunkt von 24 bis 38 °C, insbesondere von 30 bis 38 °C, herstellen. Die Bestimmung des Flammpunkts erfolgt im Wesentlichen gemäß den Arbeitsvorschriften von ISO 2919 (Pensky-Martens), EN 22719 (Pensky-Martens) oder DIN 51 755 (Abel-Pensky). Der Feststoffgehalt in einem erfindungsgemäßen Mittel kann über die zugegebene Menge an Komponente (v), insbesondere 1-Methoxypropanol, n-Butanol, vorteilhaft bis 46 Gew.-%, insbesondere einen Feststoffgehalt im Bereich von 40 bis 46 Gew.-%, eingestellt werden, wobei man vorteilhaft eine Lagerstabilität von ca. 6 Monaten erreichen kann. In der Regel wird der so genannte Feststoffgehalt der vorliegenden Zubereitungen durch Abdunsten des Lösemittels (rd. 1 Stunde bei 125 °C) bestimmt. Die Bestimmung des Feststoffgehalts erfolgt im Wesentlichen in Anlehnung an DIN ISO 3251. Damit entspricht der besagte Feststoffgehalt im Allgemeinen der bei Applikation auf einem Substrat verbleibenden Beschichtung.

Geeigneterweise liegt der Feststoffgehalt bei ≤ 50 Gew.-%, bezogen auf das erfindungsgemäße Mittel, wobei solche Mittel mit weitgehend gleichen Eigenschaften in der Regel bis zu 6 Monaten lagerstabil sind. Vorzugsweise beträgt der Feststoffgehalt 30 bis 48 Gew.-%, besonders bevorzugt 39 bis 46 Gew.-%, ganz besonders bevorzugt 42 bis 44 Gew.-%. Erfindungsgemäße Mittel können aber auch einen höheren Feststoffgehalt aufweisen, jedoch steigt dann die Neigung zur Gelbildung.

So zeichnet sich das erfindungsgemäße Mittel durch einen Flammpunkt oberhalb 21 °C, einen vergleichsweise hohen Feststoffgehalt und eine ausreichende Lagerstabilität aus. Ferner ist das erfindungsgemäße Mittel als solches oder als Rohstoff für einen Lack in hervorragender Weise zur Beschichtung von Substraten geeignet. Dabei kann man Beschichtungen bzw. Artikel mit einer ausgezeichneten Oberflächenqualität erzielen.

Die vorliegende Erfindung wird durch die nachfolgenden Bespiele näher erläutert, ohne den Erfindungsgegenstand zu beschränken:

### Beispiele

### Beispiel 1

In einem geeigneten Reaktionsgefäß wurden 620 Gewichtsteile Methyltriethoxysilan und 181 Gewichtsteile Tetraethoxysilan vorgelegt und 185 Gewichtsteile eines 50%igen Kieselsols (Köstrosol^{®} 3550) zugegeben. Unter Rühren wurde die Silan-Kieselsolmischung auf 5 °C abgekühlt und dann 13 Gewichtsteile 37%ige Schwefelsäure zugefügt. Nach ca. 10 Minuten begann die Hydrolyse der Silane und die Temperatur stieg innerhalb von 10 Minuten auf 38 °C. Die Reaktionsmischung wurde 1 Stunde unter Abkühlen auf 20 °C gerührt, und dann wurden 430 Gewichtsteile Ethanol im Vakuum bei 40 °C abdestilliert. Die Destillation wurde abgebrochen und 430 Gewichtsteile 1-Methoxypropanol zugesetzt. Danach wurde die Destillation im Vakuum bei 40 °C fortgesetzt, wobei ein azeotropes Gemisch von Ethanol und 1-Methoxypropanol erhalten wurde. Gleichzeitig wurde 1-Methoxypropanol zugetropft und die Destillation beendet, als die Restmenge an Ethanol in der Fraktion bei ca. 17 GC-Flächenprozent lag. Die Reaktionsmischung wurde abgekühlt und auf einen Feststoffgehalt von 45 Gew.-% mit 1-Methoxypropanol eingestellt. Es wurde ein milchig weißes Produkt mit geringem, leicht aufrührbarem Bodensatz erhalten.
Flammpunkt: 38 °C

### Beispiel 2

In einem geeigneten Reaktionsgefäß wurden 620 Gewichtsteile Methyltriethoxysilan und 181 Gewichtsteile Tetraethoxysilan vorgelegt und 185 Gewichtsteile eines 50%igen Kieselsols zugegeben. Unter Rühren wurde die Silan-Kieselsolmischung auf 5 °C abgekühlt und dann 13 Gewichtsteile 37%ige Schwefelsäure zugefügt. Nach ca. 10 Minuten begann die Hydrolyse der Silane, und die Temperatur stieg innerhalb von 10 Minuten auf 35 °C. Die Reaktionsmischung wurde 1 Stunde unter Abkühlen auf 20 °C gerührt, und dann wurden 430 Gewichtsteile Ethanol im Vakuum bei 40 °C abdestilliert. Die Destillation wurde abgebrochen und 430 Gewichtsteile 1-Methoxypropanol zugesetzt. Die Reaktionsmischung wurde abgekühlt und auf einen Feststoffgehalt von 43 Gew.-% mit 1-Methoxypropanol eingestellt. Es wurde ein milchig weißes Produkt mit geringem, leicht aufrührbarem Bodensatz erhalten.
Flammpunkt: 24 °C

### Beispiel 3(Vergleichsbeispiel)

In einem geeigneten Reaktionsgefäß wurden 620 Gewichtsteile Methyltriethoxysilan und 181 Gewichtsteile Tetraethoxysilan vorgelegt und 185 Gewichtsteile eines 50%igen Kieselsols zugegeben. Unter Rühren wurde die Silan-Kieselsolmischung auf 5 °C abgekühlt und dann 13 Gewichtsteile 37%ige Schwefelsäure zugefügt. Nach ca. 10 Minuten begann die Hydrolyse der Silane, und die Temperatur stieg innerhalb von 10 Minuten auf 35 °C. Die Reaktionsmischung wurde 1 Stunde unter Abkühlen auf 20 °C gerührt, und dann wurden 200 Gewichtsteile 1-Methoxypropanol zugesetzt. Die Reaktionsmischung hatte wegen des hohen Gehalts an Hydrolyse-Ethanol einen Feststoffgehalt von nur 28 Gew.-%. Es wurde ein milchig weißes Produkt mit geringem, leicht aufrührbarem Bodensatz erhalten.
Flammpunkt: 14 °C.

### Beispiel 4

In einem geeigneten Reaktionsgefäß wurden 620 Gewichtsteile Methyltriethoxysilan und 181 Gewichtsteile Tetraethoxysilan vorgelegt und 185 Gewichtsteile eines 50%igen Kieselsols zugegeben. Unter Rühren wurde die Silan-Kieselsolmischung auf 1 °C abgekühlt und dann 13 Gewichtsteile 37%ige Schwefelsäure zugefügt. Nach ca. 5 Minuten begann die Hydrolyse der Silane, und die Temperatur stieg innerhalb von 6 Minuten auf 42 °C. Die Reaktionsmischung wurde 1 Stunde unter Abkühlen auf 20 °C gerührt, und dann wurden 330 Gewichtsteile Ethanol im Vakuum bei 40 °C abdestilliert. Die Destillation wurde abgebrochen und weitere 100 Gewichtsteile Ethanol abdestilliert. Nach Abbruch der Destillation im Vakuum wurde 250 Gewichtsteile n-Butanol zugefügt. Die Reaktionsmischung wurde abgekühlt und auf einen Festkörpergehalt von 45 Gew.-% mit n-Butanol eingestellt. Es wurde ein milchig weißes Produkt mit sehr geringem, leicht aufrührbaren Bodensatz erhalten.
Flammpunkt: 34 °C.

### Vergleichsbeispiel A

Es wurde wie in Beispiel 1 gearbeitet, jedoch wurde auf das Abtrennen von Hydrolysealkohol und den Zusatz eines weiteren Lösemittels verzichtet, so lag nur Ethanol aus der Hydrolyse als Lösemittel vor. Der Flammpunkt des so hergestellten Mittels wurde mit 12 bis 13 °C bestimmt.

### Vergleichsbeispiel B

Es wurde wie in Beispiel 1 gearbeitet, jedoch mit dem Unterschied, dass an Stelle von 1-Methoxypropanol Isopropanol eingesetzt wurde. Das so hergestellte Mittel wies einen Flammpunkt von 13 °C auf.

## Patentansprüche

1. Siliciumverbindungen enthaltendes Mittel, welches als Reaktionsgemisch
(i) mindestens ein Alkyltrialkoxysilan,
(ii) mindestens ein Alkoxysiloxan und/oder mindestens ein Tetraalkoxysilan,
(iii) mindestens ein wasserhaltiges Kieselsäuresol,
(iv) mindestens eine Säure und
(v) mindestens einen Alkohol, ausgewählt aus der Reihe 1-Methoxypropanol, n-Propanol, n-Butanol und tert.-Amylalkohol, oder ein entsprechendes Gemisch, wobei Komponente (v) einen Flammpunkt > 21 bis 50 °C aufweist,
enthält.

2. Siliciumverbindungen enthaltendes Mittel, erhältlich durch Mischen und Umsetzen der Komponenten
(i) 50 bis 70 Gew.-% mindestens eines Alkyltrialkoxysilans,
(ii) 10 bis 25 Gew.-% mindestens eines Alkoxysiloxans und/oder mindestens eines Tetraalkoxysilans,
(iii) 15 bis 25 Gew.-% mindestens eines wässrigen Kieselsäuresols
(iv) 0,1 bis 5 Gew.-% mindestens einer Säure,
(v) 0,1 bis 60 Gew.-% mindestens eines Alkohols und/oder Glykols, wobei die Komponente (v) einen Flammpunkt > 21 bis 50 °C aufweist und die eingesetzten Komponenten in Summe maximal 100 Gew.-% ergeben,
indem man die Komponenten (i) und (ii) sowie gegebenenfalls anteilig Komponente (v) vorlegt, Komponente (iii) zugibt, das Gemisch auf eine Temperatur im Bereich von -5 bis 10 °C einstellt und nachfolgend Komponente (iv) zusetzt, anschließend lässt man nachreagieren, destilliert danach entstandenen Hydrolysealkohol ab und ersetzt diesen durch Zugabe von Komponente (v).

3. Mittel nach Anspruch 1 oder 2,
**gekennzeichnet durch**
mindestens ein Alkyltrialkoxysilan der allgemeinen Formel I
R-Si(OR¹)₃ (I),
worin R eine lineare, verzweigte oder cyclische Alkylgruppe mit 1 bis 16 C-Atomen und R¹ eine Methyl-, Ethyl-, 1-Methoxyethyl-, 2-Methoxyethyl-, 1-Methoxypropyl-, 2-Methoxypropyl-, Alkylpolyether-, tert.-Amyl-, n-Propyl-, i-Propyl-, n-Butyl- oder i-Butyl-Gruppe darstellen.

4. Mittel nach mindestens einem der Ansprüche 1 bis 3,
**gekennzeichnet durch**
**mindestens ein Alkoxysiloxan der allgemeinen Formel II**
(R²O)₃SiO[SiO(OR²)₂]ₙSi(OR²)₃ (II),
worin die Gruppen R² gleich oder verschieden sind und ein Wasserstoffatom, eine Methyl-, Ethyl-, 1-Methoxyethyl-, 2-Methoxyethyl-, 1-Methoxypropyl-, 2-Methoxypropyl-, Alkylpolyether-, tert.-Amyl-, n-Propyl-, i-Propyl-, n-Butyl- oder i-Butyl-Gruppe darstellen und der durchschnittliche Oligomerisierungsgrad n eine Zahl von 0 bis 50 ist.

5. Mittel nach mindestens einem der Ansprüche 1 bis 3,
**gekennzeichnet durch**
mindestens ein Tetraalkoxysilan der allgemeinen Formel III
Si(OR³)₄ (III),
worin die Gruppen R³ gleich oder verschieden sind und ein Wasserstoffatom, eine Methyl-, Ethyl-, 1-Methoxyethyl-, 2-Methoxyethyl-, 1-Methoxypropyl-, 2-Methoxypropyl-, Alkylpolyether-, tert.-Amyl-, n-Propyl-, i-Propyl-, n-Butyl- oder i-Butyl-Gruppe darstellen.

6. Mittel nach mindestens einem der Ansprüche 1 bis 5,
**gekennzeichnet durch**
ein Gemisch aus mindestens einem Alkoxysiloxan der allgemeinen Formel II und mindestens einem Tetraalkoxysilan der allgemeinen Formel III.

7. Mittel nach mindestens einem der Ansprüche 1 bis 6,
**gekennzeichnet durch**
mindestens ein wässriges Kieselsäuresol aus der Reihe
(a) anionisches oder kationisches Kieselsäuresol mit 30 bis 50 Gew.-% SiO₂-Gehalt, einer Partikelgröße der Kolloidpartikel von 6 bis 50 nm und einer Oberfläche von 50 bis 300 m²/g, einem pH-Wert des Sols von 8 bis 11 und einer Viskosität bei 25 °C von weniger als 45 mPa s
oder
(b) saures Kieselsäuresol mit 20 bis 50 Gew.-% SiO₂-Gehalt, einer Partikelgröße der Kolloidpartikel von 10 bis 50 nm und einer Oberfläche von 100 bis 300 m²/g, einem pH-Wert des Sols von 2 bis 5 und einer Viskosität von weniger als 10 mPa s.

8. Mittel nach mindestens einem der Ansprüche 1 bis 7,
**gekennzeichnet durch**
mindestens eine wässrige oder konzentrierte Säure aus der Reihe Schwefelsäure, Salpetersäure, Salzsäure, Essigsäure oder Phosphorsäure.

9. Verfahren zur Herstellung eines Mittels nach einem der Ansprüche 1 bis 8,
**dadurch gekennzeichnet,**
**dass** man die Komponenten (i) und (ii) sowie gegebenenfalls anteilig Komponente (v) vorlegt, Komponente (iii) zugibt, das Gemisch auf eine Temperatur im Bereich von -5 bis 10 °C einstellt und nachfolgend Komponente (iv) zusetzt, anschließend lässt man nachreagieren, destilliert danach entstandenen Hydrolysealkohol unter vermindertem Druck ab und ersetzt im gleichen Maße wie Hydrolysealkohol sowie Wasser aus dem System entfernt werden diesen Anteil durch Zugabe von Komponente (v).

10. Verwendung des Mittels nach einem der Ansprüche 1 bis 8 oder eines Mittels, hergestellt nach Anspruch 9, für die Beschichtung von Substraten.

11. Verwendung des Mittels nach Anspruch 10 für die Beschichtung von metallischen Oberflächen, von Holz oder von Kunststoffen.

12. Verwendung des Mittels nach Anspruch 10 oder 11 für die Beschichtung von Magnesium, Aluminium, Zinn, Zink, Kupfer, Silber, Nickel, Eisen, Stahl oder Leichtmetalllegierungen.

13. Verwendung des Mittels nach einem der Ansprüche 1 bis 8 oder eines Mittels, hergestellt nach Anspruch 9, als Rohstoff für die Herstellung eines Lacks.

14. Lack gemäß Anspruch 13.

15. Beschichtung erhältlich unter Anwendung eines Mittels nach einem der Ansprüche 1 bis 8, eines Mittels, hergestellt nach Anspruch 9, oder eines Lacks nach Anspruch 13 oder 14.

16. Artikel mit einer Beschichtung gemäß Anspruch 15.

## Claims

1. Composition comprising silicon compounds, which comprises as reaction mixture
(i) at least one alkyltrialkoxysilane,
(ii) at least one alkoxysiloxane and/or at least one tetraalkoxysilane,
(iii)at least one water-containing silica sol,
(iv) at least one acid, and
(v) at least one alcohol, selected from the group consisting of 1-methoxy-propanol, n-propanol, n-butanol, and tert-amyl alcohol, or a corresponding mixture, component (v) having a flash point >21 to 50°C.

2. Composition comprising silicon compounds, obtainable by mixing and reacting
(i) from 50 to 70% by weight of at least one alkyltrialkoxysilane,
(ii) from 10 to 25% by weight of at least one alkoxysiloxane and/or at least one tetraalkoxysilane,
(iii)from 15 to 25% by weight of at least one aqueous silica sol,
(iv) from 0.1 to 5% by weight of at least one acid, and
(v) from 0.1 to 60% by weight of at least one alcohol and/or glycol,
component (v) having a flash point >21 to 50°C and the sum of the above components being not more than 100% by weight,
by introducing components (i) and (ii) and also, if desired, a fraction of component (v) as an initial charge, adding component (iii), adjusting the mixture to a temperature in the range from -5 to 10°C, and subsequently adding component (iv), then allowing the mixture to continue reacting, thereafter distilling off hydrolysis alcohol, and replacing it by adding component (v).

3. Composition according to Claim 1 or 2, **characterized by** at least one alkyltrialkoxysilane of the general formula I
R-Si(OR¹)₃ (I)
in which R is a linear, branched or cyclic alkyl group having from 1 to 16 carbon atoms and R¹ is a methyl, ethyl, 1-methoxyethyl, 2-methoxyethyl, 1-methoxypropyl, 2-methoxypropyl, alkyl polyether, tert-amyl, n-propyl, isopropyl, n-butyl or isobutyl group.

4. Composition according to at least one of Claims 1 to 3, **characterized by** at least one alkoxysiloxane of the general formula II
(R²O)₃SiO[SiO(OR²)₂]ₙSi(OR²)₃ (II)
in which the groups R² are identical or different and are a hydrogen atom, a methyl, ethyl, 1-methoxyethyl, 2-methoxyethyl, 1-methoxypropyl, 2-methoxypropyl, alkyl polyether, tert-amyl, n-propyl, isopropyl, n-butyl or isobutyl group, and the average degree of oligomerization n is a number from 0 to 50.

5. Composition according to at least one of Claims 1 to 3, **characterized by** at least one tetraalkoxysilane of the general formula III
Si (OR³)₄ (III)
in which the groups R³ are identical or different and are a hydrogen atom, a methyl, ethyl, 1-methoxyethyl, 2-methoxyethyl, 1-methoxypropyl, 2-methoxypropyl, alkyl polyether, tert-amyl, n-propyl, isopropyl, n-butyl or isobutyl group.

6. Composition according to at least one of Claims 1 to 5, **characterized by** a mixture of at least one alkoxysiloxane of the general formula II and at least one tetraalkoxysilane of the general formula III.

7. Composition according to at least one of Claims 1 to 6, **characterized by** at least one aqueous silica sol from the following series:
(a) anionic or cationic silica sol having an SiO₂ content of from 30 to 50% by weight, a colloid particle size of from 6 to 50 nm and a surface area of from 50 to 300 m²/g, a sol pH of from 8 to 11 and a viscosity at 25°C of less than 45 mPa s,
or
(b) acidic silica sol having an SiO₂ content of from 20 to 50% by weight, a colloid particle size from 10 to 50 nm and a surface area of from 100 to 300 m²/g, a sol pH of from 2 to 5 and a viscosity of less than 10 mPa s.

8. Composition according to at least one of Claims 1 to 7, **characterized by** at least one aqueous or concentrated acid from the group consisting of sulfuric acid, nitric acid, hydrochloric acid, acetic acid, and phosphoric acid.

9. Process for preparing a composition according to any of Claims 1 to 8, **characterized in that** components (i) and (ii) and also, if desired, a fraction of component (v), are introduced as an initial charge, component (iii) is added, the mixture is adjusted to a temperature in the range from -5 to 10°C and subsequently component (iv) is added, then the mixture is allowed to continue reacting, thereafter hydrolysis alcohol is distilled off under reduced pressure and this fraction is replaced, in the same degree as the removal of hydrolysis alcohol and water from the system, by adding component (v).

10. Use of the composition according to any of Claims 1 to 8 or of a composition prepared according to Claim 9 for coating substrates.

11. Use of the composition according to Claim 10 for coating metallic surfaces, surfaces of wood or surfaces of plastics.

12. Use of the composition according to Claim 10 or 11 for coating magnesium, aluminum, tin, zinc, copper, silver, nickel, iron, steel or nonferrous metal alloys.

13. Use of the composition according to any of Claims 1 to 8 or of a composition prepared according to Claim 9 as a base material for preparing a paint.

14. Paint according to Claim 13.

15. Coating obtainable using a composition according to any of Claims 1 to 8, a composition prepared according to Claim 9, or a paint according to Claim 13 or 14.

16. Article having a coating according to Claim 15.

## Revendications

1. Composition contenant des composés siliciés, qui contient sous forme de mélange réactionnel
(i) au moins un alkyltrialcoxysilane,
(ii) au moins un alcoxysiloxane et/ou au moins un tétraalcoxysilane,
(iii) au moins un sol d'acide silicique aqueux,
(iv) au moins un acide et
(v) au moins un alcool choisi dans la série constituée par le 1-méthoxypropanol, le n-propanol, le n-butanol et l'alcool tert-amylique, ou un mélange correspondant, le composant (v) présentant un point de flamme > 21 à 50 °C.

2. Composition contenant des composés siliciés, pouvant être obtenue par mélange et mise en réaction des composants
(i) 50 à 70 % en poids d'au moins un alkyltrialcoxysilane,
(ii) 10 à 25 % en poids d'au moins un alcoxysiloxane et/ou d'au moins un tétraalcoxysilane,
(iii) 15 à 25 % en poids d'au moins un sol d'acide silicique aqueux,
(iv) 0,1 à 5 % en poids d'au moins un acide,
(v) 0,1 à 60 % en poids d'au moins un alcool et/ou un glycol,
le composant (v) présentant un point de flamme > 21 à 50 °C et les composants utilisés donnant au total 100 % en poids au maximum,
par disposition au préalable des composants (i) et (ii) ainsi qu'éventuellement du composant (v) en partie, addition du composant (iii), ajustement du mélange à une température dans la plage de -5 à 10°C et ensuite addition du composant (iv), poursuite subséquente de la réaction, élimination par distillation de l'alcool d'hydrolyse ainsi formé et remplacement de celui-ci par addition du composant (v).

3. Composition selon la revendication 1 ou 2,
**caractérisée par**
au moins un alkyltrialcoxysilane de formule générale I
R-Si(OR¹)₃ (I),
dans laquelle R représente un groupe alkyle linéaire, ramifié ou cyclique ayant de 1 à 16 atomes de carbone et R¹ représente un groupe méthyle, éthyle, 1-méthoxyéthyle, 2-méthoxyéthyle, 1-méthoxypropyle, 2-méthoxypropyle, alkylpolyéther, tert-amyle, n-propyle, isopropyle, n-butyle ou isobutyle.

4. Composition selon au moins l'une des revendications 1 à 3,
**caractérisée par**
au moins un alcoxysiloxane de formule générale II
(R²O)₃SiO [SiO (OR²)2]ₙSi (OR²) (II),
dans laquelle les groupes R² sont identiques ou différents et représentent un atome d'hydrogène, un groupe méthyle, éthyle, 1-méthoxyéthyle, 2-méthoxyéthyle, 1-méthoxypropyle, 2-méthoxypropyle, alkylpolyéther, tert-amyle, n-propyle, isopropyle, n-butyle ou isobutyle et le degré moyen d'oligomérisation n est un nombre allant de 0 à 50.

5. Composition selon au moins l'une des revendications 1 à 3,
**caractérisée par**
au moins un tétraalcoxysilane de formule générale III
Si(OR³)₄ (III),
dans laquelle les groupes R³ sont identiques ou différents et représentent un atome d'hydrogène, un groupe méthyle, éthyle, 1-méthoxyéthyle, 2-méthoxyéthyle, 1-méthoxypropyle, 2-méthoxypropyle, alkylpolyéther, tert-amyle, n-propyle, isopropyle, n-butyle ou isobutyle.

6. Composition selon au moins l'une des revendications 1 à 5,
**caractérisée par**
un mélange d'au moins un alcoxysiloxane de formule générale II et d'au moins un tétraalcoxysilane de formule générale III,

7. Composition selon au moins l'une des revendications 1 à 6,
**caractérisée par**
au moins un sol d'acide silicique aqueux choisi dans la série consistant en
(a) un sol d'acide silicique anionique ou cationique ayant une teneur en SiO₂ de 30 à 50 % en poids, une taille de particule des particules colloïdales de 6 à 50 nm et une surface spécifique de 50 à 300 m²/g, un pH du sol de 8 à 11 et une viscosité à 25°C de moins de 45 mPa.s.
ou
(b) un sol d'acide silicique acide ayant une teneur en SiO₂ de 20 à 50 % en poids, une taille de particule des particules colloïdales de 10 à 50 nm et une surface spécifique de 100 à 300 m²/g, un pH du sol de 2 à 5 et une viscosité de moins de 10 mPa.s.

8. Composition selon au moins l'une des revendications 1 à 7,
**caractérisée par**
au moins un acide aqueux ou concentré choisi parmi l'acide sulfurique, l'acide nitrique, l'acide chlorhydrique, l'acide acétique et l'acide phosphorique.

9. Procédé pour la préparation d'une composition selon l'une quelconque des revendications 1 à 8, **caractérisé en ce qu'**on
dispose au préalable les composants (i) et (ii) ainsi qu'éventuellement le composant (v) en partie, on ajoute le composant (iii), on porte le mélange à une température dans la plage de -5 à 10 °C et ensuite on ajoute le composant (iv), puis on poursuit la réaction, on élimine par distillation sous pression réduite l'alcool d'hydrolyse ainsi formé et on remplace l'alcool d'hydrolyse ainsi que l'eau éliminés du système, par addition du même volume du composant (v).

10. Utilisation de la composition selon l'une quelconque des revendications 1 à 8 ou d'une composition préparée selon la revendication 9, pour le revêtements de supports.

11. Utilisation de la composition selon la revendication 10, pour le revêtement de surfaces métalliques, de bois ou de matières plastiques.

12. Utilisation de la composition selon la revendication 10 ou 11, pour le revêtement de magnésium, d'aluminium, d'étain, de zinc, de cuivre, d'argent, de nickel, de fer, d'acier ou d'alliages de métaux légers.

13. Utilisation de la composition selon l'une quelconque des revendications 1 à 8 ou d'une composition préparée selon la revendication 9, en tant que matière première pour la fabrication d'une peinture.

14. Peinture selon la revendication 13.

15. Revêtement pouvant être obtenu par utilisation d'une composition selon l'une quelconque des revendications 1 à 8, d'une composition préparée selon la revendication 9 ou d'une peinture selon la revendication 13 ou 14.

16. Article muni d'un revêtement selon la revendication 15.
